# EUROPEAN PATENT SPECIFICATION

(11) **EP 2 481 638 B1**
(45) Date of publication and mention of the grant of the patent: **31.07.2013**
(21) Application number: 11152485.6
(22) Date of filing: 28.01.2011
(51) Int. Cl.: B60R 1/08, B29D 11/00, B60R 1/12

(54) **Rear view mirror assembly with optical indicator**
Rückspiegelanordnung mit optischer Anzeigeleuchte
Ensemble de rétroviseur avec indicateur optique

(43) Date of publication of application: 01.08.2012
(73) Proprietor: SMR Patents S.à.r.l., 1653 Luxembourg (LU)
(72) Inventor: Scott, Edwards, South Australia Broadview, 5083 (AU); Belcher, Simon, South Plympton, 5038 (AU); Nicholson, James, Belair, 5052 (AU)
(74) Representative: Weber-Bruls, Dorothée

(56) References cited:
- GB-A- 2 105 866
- US-A1- 2003 001 301
- US-A1- 2003 002 179
- US-A1- 2004 084 681
- US-B1- 6 276 821
- US-B1- 6 523 976

## Description

### BACKGROUND ART

### Field of the Invention

The invention relates to an assembly with an optical indicator placed in a side rear view mirror assembly for a motor vehicle. More particularly, the invention relates to an optical indicator that is mounted to shine through the plastic mirror of a side rear view mirror assembly and is preferably used as an alert signal. to identify when an object is occupying the blind spot of the motor vehicle.

### Description of the Related Art

The driver of a motor vehicle must recognize that objects such as other motor vehicles move with respect to the motor vehicle being driven by the driver. As such, the driver must constantly review his or her surroundings to determine whether a desired path of travel is not obstructed or, if taken, would cause a collision. Tools that assist a driver in reviewing the space surrounding the motor vehicle include the rear view mirror and the side rear view mirrors. These mirrors allow the driver to review the surroundings generally disposed behind the driver without the driver having to turn his or her head more than a minimal amount. Locations commonly referred to as "blind spots" exist on either side of the motor vehicle. These blind spots are spaces that are not visible to the driver when the driver is looking in the mirrors and viewing of these blind spots requires the driver to turn his or her head to look to see if another motor vehicle or some other object has entered the blind spots. To overcome this problem, blind spot indicators have sensors that identify when objects enter blind spots. These sensors notify the driver that a blind spot is now being occupied. Indicators in the art include light generators and sound generators. Placement of these generators is critical as it is in the best interests of the driver to have these located within the driver's peripheral vision and in an area where the driver frequently looks.

Optical indicators are used to notify the driver of a vehicle that a hazardous situation has been recognized by automatic sensors. Blind spot detection is one of these alert indications. There are other hazardous situations that can be detected by sensors and indicated with the alert indicator. Examples are a distance control, surrounding monitoring, crash warning, temperature indication and ice warning, status indications etc.

Conventional glass mirrors for automotive use are heavy (especially with the trend towards larger mirrors), tend to be difficult to form aspheric or complex shapes, and are prone to shatter in the case of accidents. The replacement of glass with a plastic substrate would offer the ability to reduce weight, mould complex shapes, integrate retention features on the rear surface of the substrate, and achieve a high level of impact resistance. However, plastic substrates tend to be soft, would be readily damaged by UV radiation, heat and water, and would have a propensity towards causing the reflective surface to craze.

In addition to the softness problems that would expect to be introduced by the use of a plastic substrate for mirrors, some reflective layers typically used for mirrors (of any type) that are formed from direct metal deposition (such as of aluminium or silver) also themselves tend to be soft. To minimise this problem with glass substrates, most reflective layers are conventionally applied to the rear surface. However, for reflective metals such as chromium, which are harder and more resistant to the elements by virtue of their chemical and mechanical properties, these metals are predominantly applied to the front surface of glass substrates. However, if this were attempted with a plastic substrate, it would be expected that the reflective coating would exhibit crazing, which would be made worse in durability testing such as thermal cycling, and which would likely also fail other standard tests such as a salt spray test.

In the case of plastic mirrors, the reflective layer could be applied to the rear or front surface and a hard coating applied in order to provide environmental exposure protection of the plastic substrate and the reflective coating, whilst providing improved abrasion resistance. However, for an automotive application, a rear surface plastic mirror has not been regarded as suitable as it would be interrupted by any retention/clipping features on the rear of the mirror. Also, in the case of an applied hard coating, interference bands would be present which are cosmetically unacceptable. So the objective is to manufacture a plastic mirror, suitable for automotive applications, which does not craze, which does not have interference fringes and which passes the normal automotive tests such as a salt spray test, thermal cycling and shock tests, and accelerated weathering tests.

This type of plastic mirror is for example known from the not published application AU 2009906281.

A method of manufacture of high optical quality transparent plastic for use as a mirror or glass substitute is known from US 2003/0001301 A1 (closest prior art).

It is known from US 6,276,821 to mount an indicator behind a mirror glass to shine through the reflective surface. In figure 44 of the prior art an example is shown, that comprises a backing plate with an integrated device that covers a LED and a light guide structure. The backing plate is connected to the mirror glass and is adjustable mounted in the mirror head.

The prior art solution does not fulfill the need to direct light to driver's eyes in a sufficient way and to be designed for an easy and cost efficient way and combine the optimized solution with a plastic mirror.

### SUMMARY OF THE INVENTION

A side rear view mirror assembly is used in conjunction with a motor vehicle equipped with a blind spot sensor designed to detect objects in blind spots of the motor vehicle. The side rear view mirror assembly includes a base fixedly secured to the motor vehicle. A mirror case can be movably secured to the base. The mirror case defines a housing and a mirror opening facing rearward. A plastic mirror is secured in a manner allowing an operator of the motor vehicle to view rearward of the motor vehicle. The side rear view mirror assembly also includes a blind spot indicator fixedly secured to the plastic glass and in communication with the blind spot sensor to receive signals from the blind spot sensor and to indicate to the operator of the motor vehicle when an object is in a blind spot of the motor vehicle. The blind spot indicator is directed at the operator. The indicator is integrated into the plastic glass and has a small height. The optical indicator is structured with at least one light source and a light guide designed to direct light to operator's eyes. The light guide is integrated into the second surface of the plastic mirror. An alternative design could include a diffuser integrated into the second surface of the plastic mirror.

### BRIEF DESCRIPTION OF THE DRAWINGS

Advantages of the invention will be readily appreciated as the same becomes better understood by reference to the following detailed description when considered in connection with the accompanying drawings, wherein:
Figure 1 is a top view of a motor vehicle with a second motor vehicle located in a blind spot of the first motor vehicle;
Figure 2 is a perspective view of one indicator in prior art;
Figure 3 is a view of mirror glass with indication signs;
Figure 4 is a cross section of a first embodiment;
Figure 5 shows a cross section of a further plastic glass;
Figure 6 shows a cross section of another embodiment of invention; and
Figure 7 shows integrated solutions.

### DETAILED DESCRIPTION OF THE PREFERRED EMBODIMENT

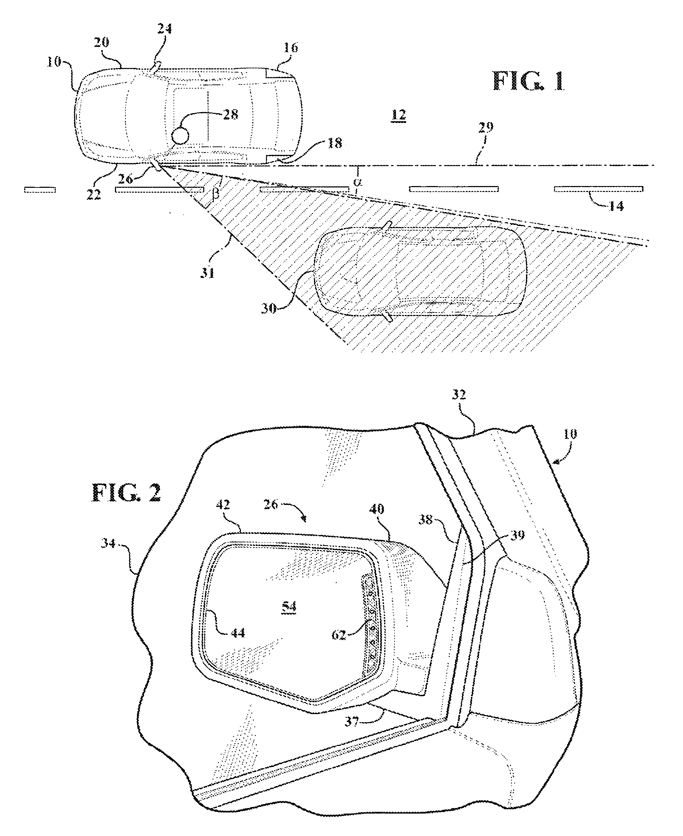

Referring to Figure 1, a motor vehicle 10 is shown driving along a road 12 that has a dashed line 14 indicating a boundary of a lane of the road 12. The motor vehicle 10 is equipped with blind spot sensors 16, 18 disposed along each side 20, 22 of the motor vehicle 10. The motor vehicle 10 is also equipped with two side rear view mirror assemblies 24, 26 that extend out from each of these sides 20, 22 respectively. The side rear view mirror assemblies 24, 26 are used by an operator, graphically represented by a circle 28 in Figure 1, to identify things that are going on outside the motor vehicle 10 rearwardly thereof. The operator 28 will adjust the side rear view mirror assemblies 24, 26 in a manner which allows the operator 28 to be satisfied that as much of the space rearward that can be viewed is being viewed by the operator 28. While most, if not all, motor vehicles 10 are equipped with two side rear view mirror assemblies 24, 26, the remainder of the discussion will focus on the side rear view mirror assembly 26 that is on the driver side 22 of the motor vehicle 10. It will be appreciated by those skilled in the art that the following discussion with regard to the driver side rear view mirror assembly 26 applies equally to the passenger side rear view mirror assembly 24.

When an operator 28 uses a side rear view mirror assembly 26, it is typically adjusted such that the orientation of the mirror includes a portion of the driver side 22 of the motor vehicle therein. The operator 28 does this for purposes of orientation. As is shown in Figure 1, the field of view for the side view mirror generally includes an angle [alpha]. Disposed adjacent the field of view 29 that is visible to the operator 28 is what is commonly referred to as a blind spot 31 that extends generally through an angle [beta]. The operator 28 cannot see what is in the blind spot 31, crosshatched in Figure 1 without turning the head of the operator 28 in that direction. Said another way, the operator 28 cannot see anything that is in the blind spot 31 through angle [beta] by looking in the side rear view mirror assembly 26. It is the blind spot sensor 18 that determines whether an object 30, a motor vehicle shown in Figure 1, is in the blind spot. If so, the blind spot sensor 18 will transmit over the vehicle communication system an appropriate signal to eventually indicate to the operator 28 that an object does in fact exist in the blind spot 31. It will be the operator's decision as to whether the operator 28 will turn his or her head to view the object 30 or to operate as if the object 30 continues to be in the blind spot 31 and act accordingly with regard to the operation and direction of travel of the motor vehicle 10.

Referring to Figure 2, the side rear view mirror assembly is generally indicated at 26. The perspective of this Figure is from that of the operator 28 as the operator 28 looks into the side rear view mirror assembly 26 to see that which is rearward of the operator 28 and a portion of the motor vehicle 10. Figure 2 includes a portion of a door 32 and a window 34.

The side rear view mirror assembly includes a base 38 that is fixedly secured to the motor vehicle 10 and, more specifically, the door 32 of the motor vehicle 10. The base 38 may or may not include a sail similar to the one shown in Figure 2. The base 38 is secured to the door 32 through known means. Depending on the design of the base 38, the base 38 may include either a lower rear wall 37 or an upper rear wall 39, or both.

The side rear view mirror assembly 26 also includes a mirror case 40 that is movably secured to the base 38. The mirror case 40 is movable in that it may be pivoted about the base 38 to allow the mirror case 40 to move closer to the side 22 of the motor vehicle 10 when situations require a narrower profile of motor vehicle 10. The pivoting of the mirror case 40 also comes in handy when the motor vehicle moves with respect to a fixed object in close proximity therewith such that the mirror case 40 is pushed in one direction or another due to the relative tightness of the position at which the motor vehicle 10 is operating.

The mirror case 40 defines a housing 42 and a mirror opening 44. The mirror opening 44 faces rearward with respect to forward direction of the motor vehicle 10. The mirror case 40 may include additional openings other than the mirror opening 44 for side markers, turn signals, security lights, sensors or cameras and the like. Otherwise, the mirror case 40 includes a housing 42 that is aerodynamic and aesthetically similar to the general design of the motor vehicle 10. The blind spot indicator 62 is positioned adjacent of the plastic mirror or behind the plastic mirror. The blind spot indicator 62 includes a light source 64 that is illuminated when the blind spot sensor 18 senses the presence of the object 30 in the blind spot of the motor vehicle 10.

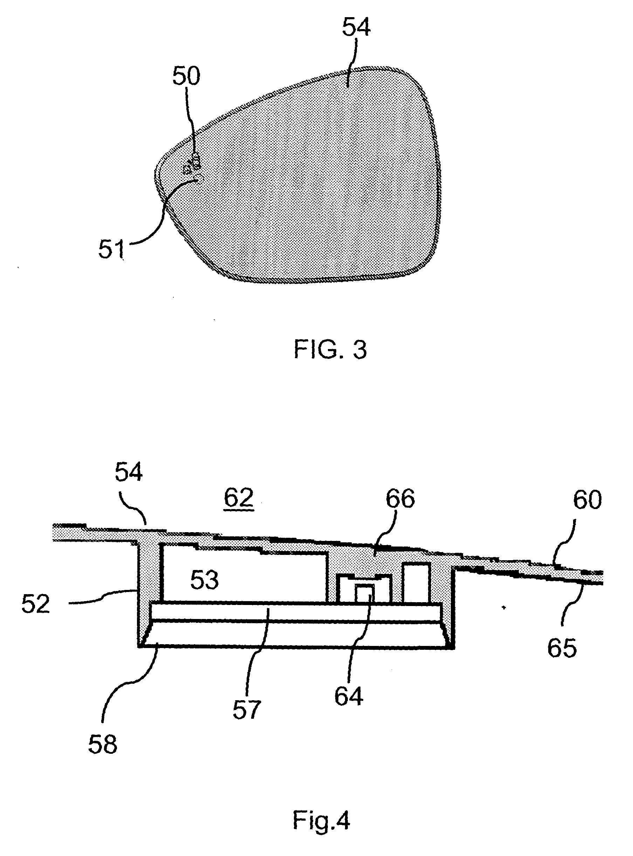

Fig 3 shows a view on the front side of a plastic mirror. The plastic mirror 54 is molded to fit into the mirror opening 44 of a rear view mirror assembly. The outer side of the plastic mirror is coated with a reflective layer. On the left outer side of the plastic mirror 54 a small icon 50 is engraved in the reflective layer that shows the ISO symbol of two vehicles in an overtaking position. Below this symbol a circle 51 is visible, through which the light of indicator shines in direction to operator 28. In the area of the circle the second inner side of the plastic mirror bears an optical element.

Figure 4 shows a first schematic cross section of the indicator integrated into a plastic mirror. The plastic mirror 54 is molded with walls 52 at the second surface 65 of the plastic mirror. The walls 52 form a sealed mounting space 53 for the optical indicator. In addition an optical element 66 is molded together with the plastic mirror and the walls.

The sealed mounting space 53 is adapted to the size of a printed circuit board 57 that is installed in the opening. An LED light source, 64 is mounted to the printed circuit board 57. The LED 64 is mounted to provide light in the direction of the optical element 66 of the plastic mirror.

The walls 52 of the plastic mirror are formed with shoulders or edges to support the printed circuit board and to locate and fix it in the mounting space. A cover or encapsulation 58 closes the mounting space of the optical indicator to seal it from dirt and moisture influences. The encapsulation could be a resin which permanently covers the PCB or a cover which is a separate moulding that allows serviceability of the light source.

The cover can have an opening as lead through for the electrical connection of the optical indicator 62.

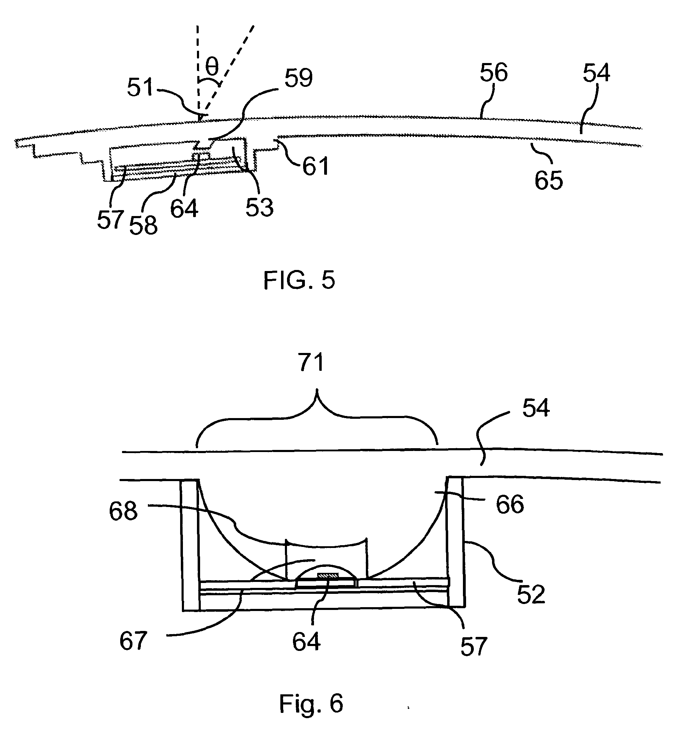

Figure 5 shows a cross section of a plastic glass 54. The mirror glass 54 has a front side 60 that is visible for the driver. On the front side a reflective surface 56 reflects light in the visible spectrum. The reflective material is normally a metal or an alloy that is sputtered onto the plastic substrate. To protect the reflective surface a cover layer for example a hard coating is used. In the area of the circle 51 reflective material is deleted totally or to a defined remaining thickness by laser engraving. It is possible to use a very thin remaining reflective surface 56 which appears semi-transparent to operator.

The plastic mirror 54 forms an integrated mounting space 53 that hosts the indicator light. The mounting space is formed to cover at least a printed circuit board 57, a light source 64 and a cover 58.

The printed circuit board 57 is mounted at the walls 52 of the mounting space 53 and the light source in form of a LED is attached on the top of the printed circuit board. The mounting space 53 forms shoulders 61 to be used as bearing faces for the cover 58. The forces of covering the mounting space 53 are spread broader if the area of contact between walls and plastic mirror is bigger. Than stress issues that can disturb the appearance of the reflective first side of the plastic mirror are reduced. For this purpose special wall form are designed that increases the contact areas and that are easily and strain less connected.

The cover is formed as a plate to close the mounting space. The plastic mirror forms a plate a light guiding pin 59 too. The light guiding pin is directed in direction to the LED 64 and inclined versus the vertical by an angle theta. The angle theta allows a direction of light from the light source 64 into the light guide pin 59 through the circle opening 51 and the plastic mirror 54 to driver's eyes.

For the indicator does not use a reflector the dimension of the optical indicator is small. The height of the mounting space is only limited by the size of LEDs and the related electrical connections and the printed circuit board and the optical element 66.

The light shines through symbols that are prepared out of the reflective layer of the mirror glass to be visible by the driver.

Figure 6 shows an alternative solution using an optical element 66 that is a total internal reflection TIR lens. A TIR lens is well adapted to sample light of a LED and direct the light against the end surface. The TIR lens 66 is designed to create a light travel space 67 around the LED 64. The space is covering the light emission angle of the LED totally. The TIR lens has a convex end face 68 that concentrates light. The TIR lens is molded in one piece with the plastic mirror 54 and the walls 52 of the mounting space. The TIR lens has in this example an end facet 71 which is flat.

The LED is a top mounted LED welded to the printed circuit board 57. The top mounted LED is in this embodiment covered by a lens 72.

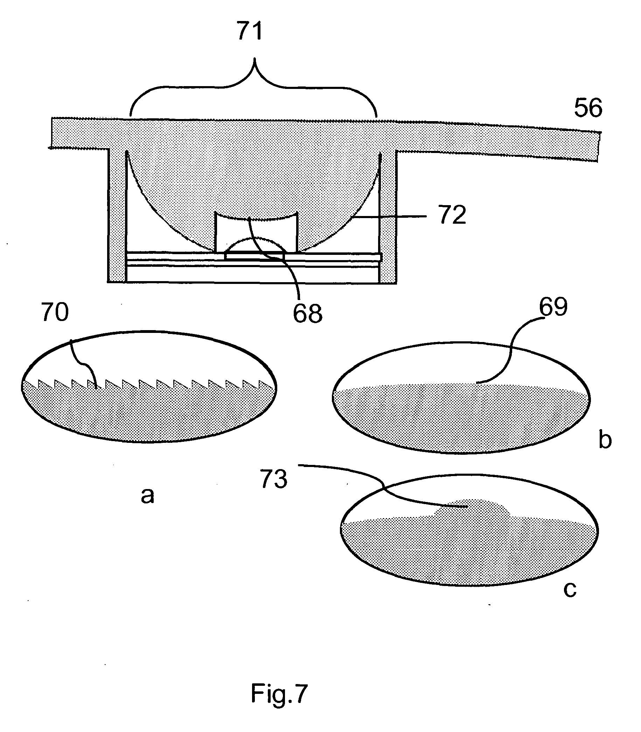

Figure 7 shows different alternatives of the optical element 66 molded in one piece with plastic mirror. The molded TIR lens can be structured in different ways. The structure 7a is a prismatic structure 70 that can cover the end facet 71 of the lens 66. The prismatic structure 70 can be also applied to the side faces 72 of the lens 66 and / or to the convex end face 68.

End facet 71 can be structures to follow a curved form as a convex or concave form 69 as shown in Figure 7b. An additional convex lens 73 can be designed in the end facet 71.

The surface 56 of the plastic mirror is modified to remove reflective layer from the substrate. This can be done after producing and assembling the mirror with optical indicator 62 or during the process of coating the reflective layer to the substrate by using a mask.

Any form of the indication sign and the mounting space is possible to achieve the integrated solution.

The integrated optical indicator solution can be used also as turn signal indicator and more than one single LED can be mounted to illuminate the indicator.

If more than one LED is used the optical elements must be related to the single LEDs to direct light according to legal or customer requirements.

### Legend:

| | | | |
|---|---|---|---|
| 10 | motor vehicle | | |
| 12 | road | 61 | shoulder |
| 14 | dashed line | 62 | indicator |
| 16, 18 | blind spot sensors | 63 | end area of cover |
| 20, 22 | side of the motor vehicle | 64 | light source |
| 24, 26 | side rear view mirror assemblies | 65 | Second Side |
| 28 | operator | 66 | Optical element |
| 29 | field of view | 67 | Light travel space |
| 30 | object | 68 | convex end facet |
| 31 | blind spot | 69 | Convex structure |
| 32 | portion of a door | 70 | prismatic structure |
| 34 | window | 71 | end facet |
| 38 | base | 72 | side face |
| 37 | lower rear wall | 73 | lens |
| 39 | upper rear wall | | |
| 40 | mirror case | | |
| 42 | mirror housing | | |
| 44 | mirror opening | | |
| 50 | symbol | | |
| 51 | circle | | |
| 52 | wall | | |
| 53 | mounting space | | |
| 54 | Plastic Mirror | | |
| 56 | reflective first surface | | |
| 57 | printed circuit | | |
| 58 | cover | | |
| 59 | light guide pin | | |
| 60 | front side | | |

## Claims

1. A plastic mirror (54) for automotive use having a shape that fits to a mirror housing (42) of a mirror assembly attached to a vehicle and having a first surface (56) at least coated with reflective material, **characterized in that** an optical element (66) forming a lens is integrally formed in the plastic mirror's second surface (65).

2. A plastic mirror (54) according to claim 1 **characterized in that** the second surface contains attachment means (52)

3. A plastic mirror (54) according claim 1 **characterized in that** the optical element forms a TIR lens.

4. A plastic mirror (54) according claim 1 **characterized in that** the optical element (66) covers at least one LED (64).

5. A plastic mirror (54) according claim 1 **characterized in that** the optical element (66) has a convex, flat or concave inner facet (68).

6. A plastic mirror (54) according claim 1 **characterized in that** the optical element (66) has a convex, flat or concave outer facet (71).

7. A plastic mirror (54) according claim 6 **characterized in that** the outer facet (71) has a structure of prismatic elements (70) at least at one outer surface of the optical element.

8. A plastic mirror (54) according claim 1 **characterized in that** the attachment means form walls to create a mounting space (53).

9. A plastic mirror (54) according claim 8 **characterized in that** the mounting space hosts a printed circuit board with mounted LED (64) and is enclosed by a cover or encapsulate (58).

## Patentansprüche

1. Kunststoffspiegel (54) zur Verwendung in Kraftfahrzeugen, mit einer Form, die angepasst ist an ein Spiegelgehäuse (42) einer an einem Fahrzeug befestigten Spiegelanordnung, und mit einer ersten Oberfläche (56), die zumindest mit reflektierendem Material beschichtet ist, **dadurch gekennzeichnet, dass** ein eine Linse bildendes optisches Element (66) integral in der zweiten Oberfläche (65) des Kunststoffspiegels ausgebildet ist.

2. Kunststoffspiegel (54) nach Anspruch 1, **dadurch gekennzeichnet, dass** die zweite Oberfläche Befestigungsmittel (52) enthält.

3. Kunststoffspiegel (54) nach Anspruch 1, **dadurch gekennzeichnet, dass** das optische Element eine TIR-Linse bildet.

4. Kunststoffspiegel (54) nach Anspruch 1, **dadurch gekennzeichnet, dass** das optische Element (66) zumindest eine LED (64) abdeckt.

5. Kunststoffspiegel (54) nach Anspruch 1, **dadurch gekennzeichnet, dass** das optische Element (66) eine konvexe, flache oder konkave innere Facette (68) aufweist.

6. Kunststoffspiegel (54) nach Anspruch 1, **dadurch gekennzeichnet, dass** das optische Element (66) eine konvexe, flache oder konkave äußere Facette (71) aufweist.

7. Kunststoffspiegel (54) nach Anspruch 6, **dadurch gekennzeichnet, dass** die äußere Facette (71) zumindest an einer äußeren Oberfläche des optischen Elements eine Struktur prismatischer Elemente (70) aufweist.

8. Kunststoffspiegel (54) nach Anspruch 1, **dadurch gekennzeichnet, dass** die Befestigungsmittel zur Schaffung eines Montageraums (53) Wände bilden.

9. Kunststoffspiegel (54) nach Anspruch 8, **dadurch gekennzeichnet, dass** in dem Montageraum eine Leiterplatte mit montierter LED (64) aufgenommen ist und dass der Montageraum von einer Abdeckung oder Kapselung (58) umgeben ist.

## Revendications

1. Miroir en matière plastique (54) pour utilisation en automobile ayant une forme qui s'adapte sur un boîtier de miroir (42) d'un ensemble de rétroviseur fixé sur un véhicule et ayant une première surface (56) au moins revêtue d'un matériau réflecteur, **caractérisé en ce qu'**un élément optique (66) formant une lentille est formé d'un seul tenant dans la seconde surface (65) du miroir en matière plastique.

2. Miroir en matière plastique (54) selon la revendication 1, **caractérisé en ce que** la seconde surface comprend des moyens de fixation (52).

3. Miroir en matière plastique (54) selon la revendication 1, **caractérisé en ce que** l'élément optique forme une lentille TIR (à réflexion interne totale).

4. Miroir en matière plastique (54) selon la revendication 1, **caractérisé en ce que** l'élément optique (66) recouvre au moins une LED (64).

5. Miroir en matière plastique (54) selon la revendication 1, **caractérisé en ce que** l'élément optique (66) a une facette intérieure (68) convexe, plate ou concave.

6. Miroir en matière plastique (54) selon la revendication 6, **caractérisé en ce que** l'élément optique (66) a une facette extérieure (71) convexe, plate ou concave.

7. Miroir en matière plastique (54) selon la revendication 6, **caractérisé en ce que** la facette extérieure (71) a une structure constituée d'éléments prismatiques (70) au moins au niveau d'une surface extérieure de l'élément optique.

8. Miroir en matière plastique (54) selon la revendication 1, **caractérisé en ce que** les moyens de fixation forment des parois pour créer un espace de montage (53).

9. Miroir en matière plastique (54) selon la revendication 8, **caractérisé en ce que** l'espace de montage reçoit une carte à circuit imprimé ayant des LED montées (64) et est enfermé par un couvercle ou une encapsulation (58).
